# EUROPEAN PATENT SPECIFICATION

(11) **EP 4 395 032 B1**
(45) Date of publication and mention of the grant of the patent: **08.07.2026**
(21) Application number: 23796706.2
(22) Date of filing: 21.04.2023
(51) Int. Cl.: B60K 1/04, H01M 50/262, H01M 50/249, B60L 53/80, B60L 50/64, H01M 50/204, H01M 50/244, H01M 50/264

(54) **REPLACEABLE BATTERY MODULE**
AUSTAUSCHBARES BATTERIEMODUL
MODULE DE BATTERIE REMPLAÇABLE

(30) Priority: 25.04.2022 KR 20220050507
(43) Date of publication of application: 03.07.2024
(73) Proprietor: LG Energy Solution, Ltd., Seoul 07335 (KR)
(72) Inventor: JUNG, Min Yong, Daejeon 34122 (KR)
(74) Representative: Plasseraud IP
(86) International application number: PCT/KR2023/005421
(87) International publication number: WO 2023/211059

(56) References cited:
- EP-A2- 2 280 436
- EP-A2- 2 626 233
- JP-A- 2021 075 164
- JP-A- 2021 151 805
- KR-A- 20170 111 975
- KR-A- 20210 123 585
- KR-B1- 102 332 609
- US-A1- 2006 012 332

## Description

### Technical Field

The present invention relates to a replaceable battery module, and an electric vehicle and a battery swap station comprising the same.

The present application claims the benefit of priority based on Korean Patent Application No. 10-2022-0050507 dated April 25, 2022.

### Background Art

Light electric vehicle (LEV) markets are proposed as a solution to the problem of traffic congestion and parking shortage in large cities, and their use expands to various fields such as tourist destinations, golf carts, and distribution warehouses.

A small electric vehicle equipped with a battery pack requires battery charging for driving, but has a disadvantage that it takes a long time to charge the battery. EP 2 626 233 A2 discloses a terminal base of a power supply device for an electric vehicle.

Recently, in order to shorten the battery charging time, a battery swap method has been considered. The battery swap method means a method of replacing a used battery with a fully charged battery, and the battery swap method can provide convenience to an electric vehicle driver because the battery can be replaced within a short time.

### Technical Problem

It is a problem to be solved by the present invention to provide a replaceable battery module capable of quickly replacing a battery pack through a simple coupling structure, and an electric vehicle and a battery swap station comprising the same.

### Technical Solution

The present invention is defined by the features of independent claim 1. The dependent claims relate to embodiments of the invention. In order to solve the above problem, the replaceable battery module of the present invention comprises a battery pack including a groove formed on an outer circumferential surface and a locking member elastically connected to the bottom surface of the groove, and a battery pack mounting part provided with a mounting space, in which the battery pack is detachably mounted, and a locking jaw which is locked and fixed with the locking member so that the position of the battery pack mounted in the mounting space is fixed.

Also, when the battery pack is mounted in the mounting space, the locking member passes from one end of the locking jaw to the other end, and be locked and fixed to the other end of the locking jaw after passing through the locking jaw.

In addition, the locking member is pressed from the locking jaw upon passing from one end of the locking jaw to the other end, and moved toward the bottom surface of the groove.

Furthermore, the locking member passes through the locking jaw, and then moves in a direction away from the bottom surface of the groove as the force pressed from the locking jaw is released.

Also, the locking jaw may be provided such that one end has a thickness increasing along the mounting direction of the battery pack, and the locking member may be provided to pass through one end of the locking jaw while sliding in a state of being in contact with one end.

In addition, the locking member comprises a head part exposed to the outside of the battery pack, a body part connecting the head part and the bottom surface of the groove, and a spring member mounted on the body part.

Furthermore, the bottom surface of the groove has a through hole through which the body part passes.

Also, the spring member is provided to be compressed when the head part moves toward the bottom surface of the groove.

In addition, the locking member may comprise a separation preventing member that is coupled to a portion of the body part penetrating the through hole to prevent separation of the locking member from the groove.

Furthermore, the battery pack mounting part may comprise a coupling release part for releasing the locking coupling of the locking member when the battery pack is separated from the mounting space.

The coupling release part may comprise a push button positioned on an outer circumferential surface of the battery pack mounting part, and a rod connected to the push button and having one end which penetrates the outer circumferential surface to be exposed to the mounting space.

Also, when the push button is pressed in a mounting state of the battery pack, one end of the rod may move the locking member toward the bottom surface of the groove.

In addition, after the locking member is moved toward the bottom surface of the groove by the rod, the locking member is in a state capable of passing to one end of the locking jaw from the other end. At this time, when a user applies an external force in a direction opposite to the mounting direction of the battery pack, the battery pack may be separated from the battery pack mounting part.

Furthermore, according to another aspect of the present invention, an electric vehicle comprising the replaceable battery module is provided.

In addition, according to another aspect of the present invention, a battery swap station comprising the replaceable battery module is provided.

### Advantageous Effects

As described above, according to the replaceable battery module related to at least one example of the present invention, and the electric vehicle and the battery swap station comprising the same, the battery pack can be quickly replaced through a simple coupling structure.

### Description of Drawings

Figure 1 is a cross-sectional diagram of a replaceable battery module according to one example of the present invention.
Figures 2 to 4 are operating state diagrams for explaining a process of mounting and separating a battery pack in the replaceable battery module shown in Figure 1.
Figures 5 to 7 are diagrams showing the locking member in detail.
Figure 8 is a configuration diagram schematically showing an electric vehicle related to one example of the present invention.
Figure 9 is a configuration diagram schematically showing a battery swap station related to one example of the present invention.

### Mode for Invention

Hereinafter, a replaceable battery module according to one example of the present invention, and an electric vehicle and a battery swap station comprising the same will be described in detail with reference to the drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

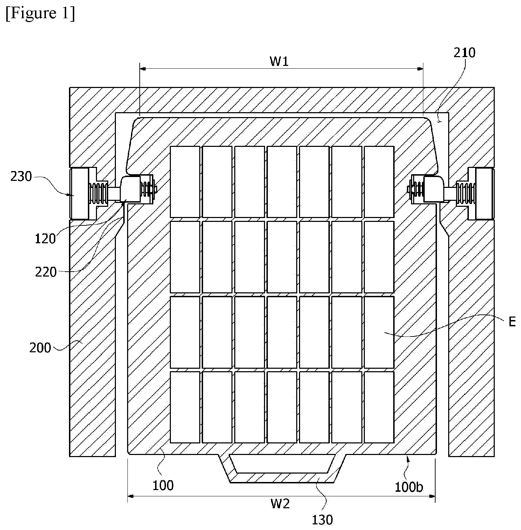

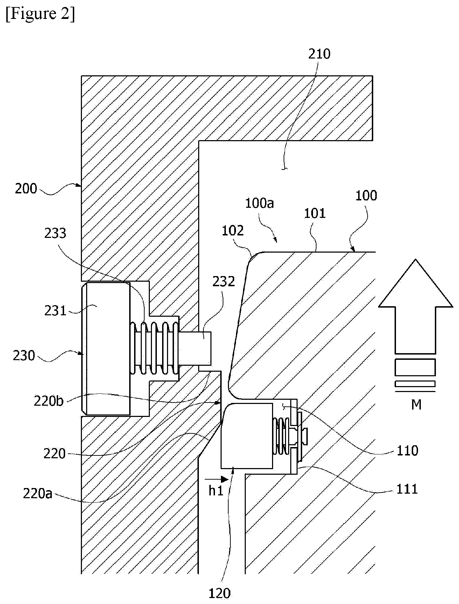

Figure 1 is a cross-sectional diagram of a replaceable battery module according to one example of the present invention, and Figures 2 to 4 are operating state diagrams for explaining a process of mounting and separating a battery pack in the replaceable battery module shown in Figure 1.

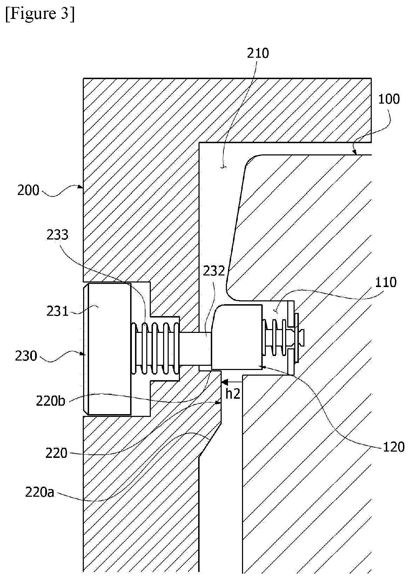

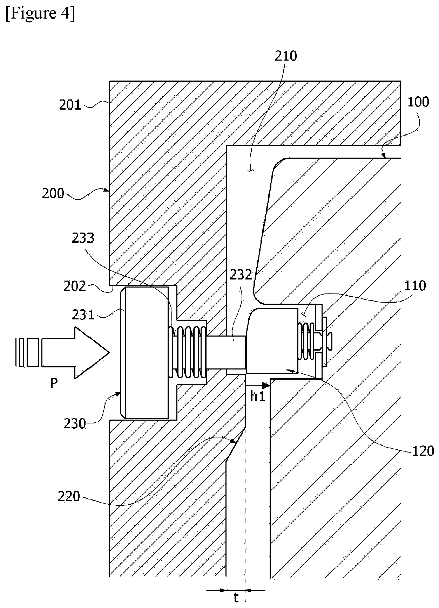

Specifically, Figure 2 is an operating state diagram for explaining a process of mounting a battery pack, Figure 3 is an operating state diagram for explaining a mounting completion state of a battery pack, and Figure 4 is an operating state diagram for explaining a process of separating a battery pack.

The present invention relates to a replaceable battery module. Also, the electric vehicle according to one example of the present invention comprises the replaceable battery module. In addition, the battery swap station according to one example of the present invention comprises the replaceable battery module. In detail, the replaceable battery module may be applied to a light electronic vehicle (LEV) or a battery swap station (also referred to as a 'battery charging station').

Referring to Figure 1, the replaceable battery module related to one example of the present invention comprises a battery pack (100) and a battery pack mounting part (200). The battery pack mounting part (200) may be provided in an electric vehicle, or may be provided in a battery charging station.

The replaceable battery module comprises a battery pack (100) including a groove (110) formed on an outer circumferential surface (102) and a locking member (120) elastically connected to the bottom surface (111) of the groove (110), and a battery pack mounting part (200) provided with a mounting space (210) in which the battery pack (100) is detachably mounted, and a locking jaw (220) which is locked and fixed with the locking member (120) so that the position of the battery pack (100) mounted in the mounting space (210) is fixed.

The battery pack (100) may comprise a case (101) and a plurality of secondary battery cells (E) accommodated inside the case (101). The outer circumferential surface of the battery pack (100) means the outer circumferential surface (102) of the case (101).

Also, the battery pack (100) may be electrically connected to the battery pack mounting part (200) in a state of being mounted in the mounting space (210) within the battery pack mounting part (200). As the battery pack (100) and the battery pack mounting part (200) are electrically connected to each other, power is supplied from a battery charging station to the battery pack (100), so that the battery pack may be charged. In addition, the power may be supplied from the battery pack (100) to an electric motor, which is a driving source of an electric vehicle.

According to the invention, the battery pack (100) comprises a groove (110) formed on an outer circumferential surface (102) and a locking member (120) elastically connected to the bottom surface (111) of the groove (110). As the locking member (120) is elastically connected to the bottom surface (111) of the groove (110), it is provided to enable pressing movement toward the bottom surface (111) of the groove (110) and return to its original position.

The locking member (120) is pressed and moved toward the bottom surface (111) of the groove by an external force, and moved in a direction away from the bottom surface (111) of the groove, when the external force is released, to return to its original position. The external force may be generated by contact with the locking jaw (220) to be described below. At this time, the direction in which the locking member (120) moves toward the bottom surface (111) of the groove (110) is referred to as a first direction (h1), and the direction in which the locking member (120) moves away from the bottom surface (111) of the groove (110) is referred to as a second direction (h2). At this time, the first direction (h1) and the second direction (h2) are directions opposite to each other.

Also, in the battery pack (100), the width (W1) of the front end (100a) and the width (W2) of the rear end (100b) may be different from each other. The front end (100a) of the battery pack (100) is a part that first enters the mounting space (210) when inserted into the mounting space, and the region in the opposite direction of the front end (100a) is referred to as the rear end (100b).

Referring to Figure 1, the battery pack (100) has the width (W1) of the front end (100a) relatively narrower than the width (W2) of the rear end (100b) so as to facilitate entry into the mounting space (210). In addition, the battery pack (100) may be provided with a handle (130) at the rear end (100b) side.

The battery pack mounting part (200) comprises a mounting space (210) in which the battery pack (100) is detachably mounted, and a locking jaw (220) locked and fixed to the locking member (220) so that the position of the battery pack (100) mounted in the mounting space (210) is fixed.

Referring to Figure 2, when the battery pack (100) is mounted, the locking member (120) passes from one end (220a) of the locking jaw (220) to the other end (220b), and when the passage is completed, it is locked and fixed to the other end (220b) of the locking jaw (220).

In a state of being locked and fixed, the locking member (120) may be in contact with at least a portion of the other end (220b) of the locking jaw (220). One end (220a) of the locking jaw (220) is positioned adjacent to an entrance through which the battery pack (100) enters the mounting space.

The locking jaw (220) may be provided such that a thickness (t) of one end (220a) increases along the mounting direction (M) of the battery pack. At this time, the locking member (120) may pass through one end (220a) while sliding in contact with one end (220a) of the locking jaw (220) along the mounting direction (M) of the battery pack.

In addition, when the locking member (120) passes from one end (220a) of the locking jaw (220) to the other end (220b), it may be pressed from the locking jaw (220) to move toward the bottom surface (111) of the groove.

That is, when the battery pack (100) enters the mounting space (210) along the mounting direction (M), the locking member (120) may be moved in the first direction (h1) by the locking jaw (220), and the locking member (120) may be gradually moved in a direction closer to the bottom surface (111) of the groove (110) by the thickness (t) of the locking jaw (220).

Also, when the passage from one end (220a) of the locking jaw (220) to the other end (220b) is completed, the locking member (120) may be elastically returned to its original position as the force pressed from the locking jaw (220) is released. As the locking member (120) is elastically returned to its original position, at least a portion may be in contact with the other end (220b) of the locking jaw (220). The contacted portion performs a locking and fixing role.

**In** addition, one end (220a) of the locking jaw (220) may have an inclined surface, and the locking member (120) may pass through the locking jaw (220) while sliding along the slope of the inclined surface. In order to minimize friction with the inclined surface, a portion of the locking member (120) in contact with the inclined surface may be rounded.

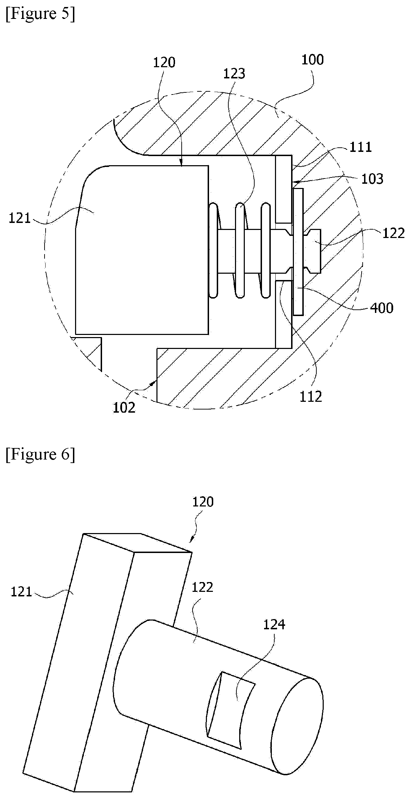

Figures 5 to 7 are diagrams showing the locking member (120) in detail.

The locking member (120) comprises a head part (121) exposed to the outside of the battery pack (100) to be capable of being locked and fixed with the locking jaw (220), a body part (122) connecting the head part (121) and the bottom surface (111) of the groove (110), and a spring member (123) mounted to the body part (122). At this time, the spring member (123) is provided to be compressed when the head part (121) moves toward the bottom surface (111) of the groove (110). That is, when the head part (121) moves in the first direction (h1) by an external force, the spring member (123) is compressed. Conversely, when the external force is released, the head part (121) moves in the second direction (h2) while the spring member (123) is elastically restored.

The head part (121) may have an approximately rectangular parallelepiped shape, and may be formed so that the corners are rounded. The head part (121) is substantially slid along the inclined surface of one end (220a) of the locking jaw (220), which is a portion locked and fixed with the other end (220b) of the locking jaw (220).

In addition, the body part (122) may have a bar shape and may be connected to the center of the head part (121). The spring member (123) may be provided to surround the body part (122) so that the body part (122) penetrates the inside. The spring member (123) may provide a restoring force that elastically returns to the original position after the head part (121) is pressed and moved. As one example, the spring member (123) may be a coil spring. Furthermore, the groove (110) may also be provided with a rail part guiding the movement of the head part (121).

Referring to Figures 5 to 7, the bottom surface (111) of the groove (110) has a through hole (112) through which the body part (122) passes. The through hole (112) may be located at the center of the bottom surface (111) of the groove (110).

In addition, the locking member (120) may comprise a separation preventing member (400) that is coupled to a portion of the body part (122) penetrating the through hole (112) to prevent separation of the locking member (120) from the groove (110).

The separation preventing member (400) may be a clip member, for example, a C-clip. The body part (122) penetrating the through hole (112) may have a clip groove (124) for which the clip member is inserted.

The through hole (112) penetrates the outer circumferential surface (102) and the inner circumferential surface (103) of the case (101), and the separation preventing member (400) is disposed on the inner circumferential surface (103). The inner circumferential surface (103) of the case (101) surrounds the mounting space (210).

In addition, the battery pack mounting part (200) may comprise a coupling release part (230) for releasing the locking coupling of the locking member (120) when the battery pack (100) is separated from the mounting space.

Referring to Figures 2 to 4, the coupling release part (230) comprises a push button (231) positioned on an outer circumferential surface (201) of the battery pack mounting part (200), and a rod (232) connected to the push button (231) and having one end which penetrates the outer circumferential surface (201) to be exposed to the mounting space (210). On the outer circumferential surface (201) of the battery pack mounting part (200), a depressed part (202) is formed, where the push button (231) may be disposed within the depressed part (202). In addition, the rod (232) penetrates the depressed part (202) to extend into the mounting space (210).

Referring to Figure 4, in a state where the battery pack (100) is mounted in the mounting space (210), when the push button (231) is pressed from the outside of the battery pack mounting part (200), one end of the rod (232) moves the locking member (120) toward the bottom surface (111) of the groove (110). As the locking member (120) is moved in the first direction (h1), the locking coupling between the locking member (120) and the locking jaw (220) may be released.

When the push button (231) is pressed in a state of mounting the battery pack (100), one end of the rod (232) moves the locking member (120) toward the bottom surface (111) of the groove (110). Also, after the locking member (120) is moved toward the bottom surface (111) of the groove (110) by the rod (232), the locking member (120) enables to pass to one end (220a) of the locking jaw (220) from the other end (220b).

In addition, the coupling release part (230) may comprise a spring member (233) mounted on the rod (232). The spring member (233) may be mounted in a state surrounding the rod (232) so that the rod (232) penetrates the inside. The spring member (233) may provide a restoring force that elastically returns to the original position after the push button (231) is pressed.

Referring to Figures 3 and 4, when the push button (231) is pressed by an external force and the rod (122) moves in the first direction (h1), the spring member (233) is compressed. Conversely, when the external force applied to the push button is released, the rod (122) moves in the second direction (h2) while the spring member (233) is elastically restored. As one example, the direction (P) in which the push button (231) is pressed may be the same direction as the first direction (h1).

The replaceable battery module according to the present invention may further comprise a cover (not shown) coupled to the battery pack mounting part. The cover is coupled to the battery pack mounting part (200) so that the mounting space (210) of the battery pack mounting part (200) is sealed. The cover prevents the mounted battery pack (100) from being separated, and serves to protect the battery pack (100) from being damaged by external impacts.

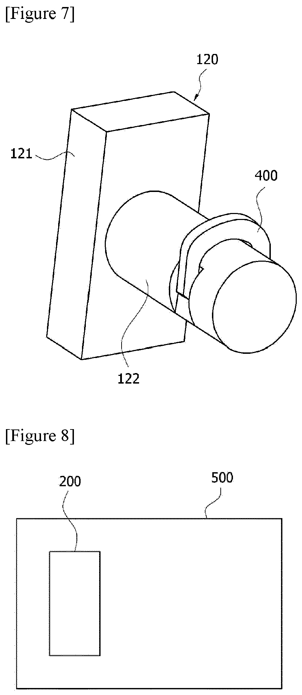

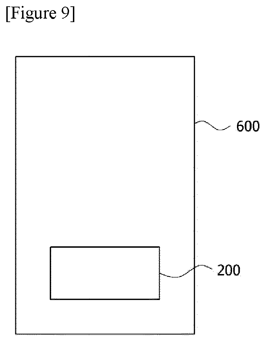

Figure 8 is a configuration diagram schematically showing an electric vehicle (500) related to one example of the present invention, and Figure 9 is a configuration diagram schematically showing a battery swap station (600) related to one example of the present invention.

Referring to Figure 8, the present invention may be an electric vehicle (500) comprising the above-described replaceable battery module. The electric vehicle (500) comprises a battery pack mounting part (200), where a battery pack may be detachably mounted on the battery pack mounting part (200). The type of the electric vehicle (500) is not particularly limited if the replaceable battery module may be mounted, which may be a small, medium, or large electric vehicle, and preferably may be a small electric vehicle. The small electric vehicle may be exemplified by, for example, an electric scooter, an electric bicycle, or a quick board, and the like. The electric vehicle comprising the above-described replaceable battery module has an advantage of shortening a replacement time when replacing an old battery pack with a new battery pack.

Referring to Figure 9, the present invention relates to a battery swap station (600) comprising the above-described replaceable battery module. The battery swap station (600) may supply power to the battery pack through the battery pack mounting part (200) to charge the battery pack. The battery swap station comprising the above-described replaceable battery module has an advantage that the replacement time consumed when mounting an old battery pack or separating a fully charged battery pack is reduced.

The preferred examples of the present invention as described above have been disclosed for illustrative purposes.

### Industrial Applicability

According to the replaceable battery module of the present invention, and the electric vehicle and the battery swap station comprising the same, replacement of a battery pack can be quickly performed through a simple coupling structure.

## Claims

1. A replaceable battery module comprising:
a battery pack (100) including a groove (110) formed on an outer circumferential surface and a locking member (120) elastically connected to the bottom surface of the groove (110); and
a battery pack mounting part (200) provided with a mounting space (210), in which the battery pack (100) is detachably mounted, and a locking jaw (220) which is locked and fixed with the locking member (120) so that the position of the battery pack (100) mounted in the mounting space (210) is fixed,
**characterized in that** the locking member (120) comprises:
a head part (121) exposed to the outside of the battery pack (100);
a body part (122) connecting the head part (121) and the bottom surface of the groove (110); and
a spring member (123) mounted on the body part (122), wherein the spring member (123) is provided to be compressed when the head part (121) moves toward the bottom surface of the groove (110), and
wherein the bottom surface of the groove (110) has a through hole (112) through which the body part (122) passes.

2. The replaceable battery module according to claim 1, wherein when the battery pack (100) is mounted in the mounting space (210),
the locking member (120) passes from one end of the locking jaw (220) to the other end, and is locked and fixed to the other end of the locking jaw (220) after passing through the locking jaw (220).

3. The replaceable battery module according to claim 2, wherein
the locking member (120) is pressed from the locking jaw (220) upon passing from one end of the locking jaw (220) to the other end, and moved toward the bottom surface of the groove (110).

4. The replaceable battery module according to claim 3, wherein
the locking member (120) passes through the locking jaw (220), and then moves in a direction away from the bottom surface of the groove (110) as the force pressed from the locking jaw (220) is released.

5. The replaceable battery module according to claim 1, wherein
the locking jaw (220) is provided such that one end has a thickness increasing along the mounting direction of the battery pack (100), and
the locking member (120) passes through one end of the locking jaw (220) while sliding in a state of being in contact with one end.

6. The replaceable battery module according to any one of claims 1 to 5, wherein
the locking member (120) comprises a separation preventing member that is coupled to a portion of the body part (122) penetrating the through hole (112) to prevent separation of the locking member (120) from the groove (110).

7. The replaceable battery module according to claim 1, wherein
the battery pack mounting part (200) comprises a coupling release part (230) for releasing the locking coupling of the locking member (120) when the battery pack (100) is separated from the mounting space (210).

8. The replaceable battery module according to claim 7, wherein the coupling release part (230) comprises:
a push button (231) positioned on an outer circumferential surface of the battery pack mounting part (200); and
a rod (232) connected to the push button (231) and having one end which penetrates the outer circumferential surface to be exposed to the mounting space (210), and
when the push button (231) is pressed in a mounting state of the battery pack (100), one end of the rod (232) moves the locking member (120) toward the bottom surface of the groove (110).

9. The replaceable battery module according to claim 8, wherein
after the locking member (120) is moved toward the bottom surface of the groove (110) by the rod (232), the locking member (120) is capable of passing to one end of the locking jaw (220) from the other end.

10. An electric vehicle comprising the replaceable battery module according to claim 1.

11. A battery swap station comprising the replaceable battery module according to claim 1.

## Patentansprüche

1. Austauschbares Batteriemodul, umfassend:
einen Batteriepack (100), welcher eine an einer äußeren Umfangsfläche ausgebildete Nut (110) und ein Verriegelungselement (120) umfasst, welches elastisch mit der Bodenfläche der Nut (110) verbunden ist; und
einen Batteriepackmontageteil (200), welcher mit einem Montageraum (210), in welchem der Batteriepack (100) abnehmbar montiert ist, und einer Verriegelungsbacke (220) bereitgestellt ist, welche mit dem Verriegelungselement (120) verriegelt und fixiert ist, so dass die Position des Batteriepacks (100), welche in dem Montageraum (210) montiert ist, fixiert ist,
**dadurch gekennzeichnet, dass** das Verriegelungselement (120) umfasst:
einen Kopfteil (121), welcher zu dem Äußeren des Batteriepacks (100) freigelegt ist;
einen Körperteil (122), welcher den Kopfteil (121) und die Bodenfläche der Nut (110) verbindet; und
ein Federelement (123), welches an dem Körperteil (122) montiert ist, wobei das Federelement (123) bereitgestellt ist, um komprimiert zu werden, wenn sich der Kopfteil (121) in Richtung der Bodenfläche der Nut (110) bewegt, und
wobei die Bodenfläche der Nut (110) ein Durchgangsloch (112) aufweist, durch welches der Körperteil (122) tritt.

2. Austauschbares Batteriemodul nach Anspruch 1, wobei, wenn der Batteriepack (100) in dem Montageraum (210) montiert ist,
das Verriegelungselement (120) von einem Ende der Verriegelungsbacke (220) zu dem anderen Ende tritt; und nach dem Durchtreten der Verriegelungsbacke (220) an dem anderen Ende der Verriegelungsbacke (220) verriegelt und fixiert ist.

3. Austauschbares Batteriemodul nach Anspruch 2, wobei
das Verriegelungselement (120) von der Verriegelungsbacke (220) auf das Durchtreten von einem Ende der Verriegelungsbacke (220) zu dem anderen Ende hin gedrückt wird und in Richtung der Bodenfläche der Nut (110) bewegt wird.

4. Austauschbares Batteriemodul nach Anspruch 3, wobei
das Verriegelungselement (120) durch die Verriegelungsbacke (220) tritt und sich dann in einer Richtung weg von der Bodenfläche der Nut (110) bewegt, wenn die von der Verriegelungsbacke (220) ausgeübte Druckkraft gelöst wird.

5. Austauschbares Batteriemodul nach Anspruch 1, wobei
die Verriegelungsbacke (220) derart bereitgestellt ist, dass ein Ende eine Dicke aufweist, welche entlang der Montagerichtung des Batteriepacks (100) zunimmt; und
das Verriegelungselement (120) durch ein Ende der Verriegelungsbacke (220) tritt, während es in einem Zustand des In-Kontakts-Stehens mit einem Ende gleitet.

6. Austauschbares Batteriemodul nach einem der Ansprüche 1 bis 5, wobei
das Verriegelungselement (120) ein Trennungs-Verhinderungselement umfasst, welches mit einem Abschnitt des Körperteils (122) gekoppelt ist, welcher das Durchgangsloch (112) durchdringt, um eine Trennung des Verriegelungselements (120) von der Nut (110) zu verhindern.

7. Austauschbares Batteriemodul nach Anspruch 1, wobei
der Batteriepackmontageteil (200) einen Kopplungslöseteil (230) zum Lösen der Verriegelungskopplung des Verriegelungselements (120), wenn der Batteriepack (100) von dem Montageraum (210) getrennt wird, umfasst.

8. Austauschbares Batteriemodul nach Anspruch 7, wobei der Kopplungslöseteil (230) umfasst:
einen Druckknopf (231), welcher an einer äußeren Umfangsfläche des Batteriepackmontageteils (200) positioniert ist; und
eine Stange (232), welche mit dem Druckknopf (231) verbunden ist und ein Ende aufweist, welches die äußere Umfangsfläche durchdringt, um zu dem Montageraum (210) freigelegt zu sein; und
wobei, wenn der Druckknopf (231) in einem Montagezustand des Batteriepacks (100) gedrückt wird, ein Ende der Stange (232) das Verriegelungselement (120) in Richtung der Bodenfläche der Nut (110) bewegt.

9. Austauschbares Batteriemodul nach Anspruch 8, wobei, nachdem das Verriegelungselement (120) durch die Stange (232) in Richtung der Bodenfläche der Nut (110) bewegt wurde, das Verriegelungselement (120) in der Lage ist, von dem anderen Ende zu einem Ende der Verriegelungsbacke (220) durchzutreten.

10. Elektrofahrzeug, umfassend das austauschbare Batteriemodul nach Anspruch 1.

11. Batterieaustauschstation, umfassend das austauschbare Batteriemodul nach Anspruch 1.

## Revendications

1. Module de batterie remplaçable comprenant :
un bloc-batterie (100) comportant une rainure (110) formée sur une surface circonférentielle extérieure et un élément de verrouillage (120) relié de manière élastique à la surface de fond de la rainure (110) ; et
une partie de montage de bloc-batterie (200) munie d'un espace de montage (210), dans lequel le bloc-batterie (100) est monté de manière détachable, et d'une mâchoire de verrouillage (220) qui est verrouillée et fixée avec l'élément de verrouillage (120) de sorte que la position du bloc-batterie (100) monté dans l'espace de montage (210) est fixée,
**caractérisé en ce que** l'élément de verrouillage (120) comprend :
une partie de tête (121) exposée à l'extérieur du bloc-batterie (100) ;
une partie de corps (122) reliant la partie de tête (121) et la surface de fond de la rainure (110) ; et
un élément à ressort (123) monté sur la partie de corps (122), dans lequel l'élément à ressort (123) est prévu pour être comprimé lorsque la partie de tête (121) se déplace vers la surface de fond de la rainure (110), et
dans lequel la surface de fond de la rainure (110) présente un trou traversant (112) à travers lequel passe la partie de corps (122).

2. Module de batterie remplaçable selon la revendication 1, dans lequel, lorsque le bloc-batterie (100) est monté dans l'espace de montage (210),
l'élément de verrouillage (120) passe d'une extrémité de la mâchoire de verrouillage (220) à l'autre extrémité, et est verrouillé et fixé à l'autre extrémité de la mâchoire de verrouillage (220) après avoir traversé la mâchoire de verrouillage (220).

3. Module de batterie remplaçable selon la revendication 2, dans lequel
l'élément de verrouillage (120) est comprimé par la mâchoire de verrouillage (220) lors du passage d'une extrémité de la mâchoire de verrouillage (220) à l'autre extrémité, et déplacé vers la surface de fond de la rainure (110).

4. Module de batterie remplaçable selon la revendication 3, dans lequel l'élément de verrouillage (120) traverse la mâchoire de verrouillage (220), puis se déplace dans une direction à l'opposé de la surface de fond de la rainure (110) lorsque la force exercée par la mâchoire de verrouillage (220) est libérée.

5. Module de batterie remplaçable selon la revendication 1, dans lequel la mâchoire de verrouillage (220) est prévue de sorte qu'une extrémité présente une épaisseur qui augmente le long de la direction de montage du bloc-batterie (100), et l'élément de verrouillage (120) traverse une extrémité de la mâchoire de verrouillage (220) tout en glissant dans un état où il est en contact avec une extrémité.

6. Module de batterie remplaçable selon l'une quelconque des revendications 1 à 5, dans lequel
l'élément de verrouillage (120) comprend un élément empêchant la séparation qui est couplé à une portion de la partie de corps (122) pénétrant dans le trou traversant (112) pour empêcher une séparation de l'élément de verrouillage (120) hors de la rainure (110).

7. Module de batterie remplaçable selon la revendication 1, dans lequel
la partie de montage de bloc-batterie (200) comprend une partie de libération de couplage (230) pour libérer le couplage par verrouillage de l'élément de verrouillage (120) lorsque le bloc-batterie (100) est séparé de l'espace de montage (210).

8. Module de batterie remplaçable selon la revendication 7, dans lequel la partie de libération de couplage (230) comprend :
un bouton-poussoir (231) positionné sur une surface circonférentielle extérieure de la partie de montage de bloc-batterie (200) ; et
une tige (232) reliée au bouton-poussoir (231) et présentant une extrémité qui pénètre dans la surface circonférentielle extérieure pour être exposée à l'espace de montage (210), et
lorsque le bouton-poussoir (231) est pressé dans un état de montage du bloc-batterie (100), une extrémité de la tige (232) déplace l'élément de verrouillage (120) vers la surface de fond de la rainure (110).

9. Module de batterie remplaçable selon la revendication 8, dans lequel après que l'élément de verrouillage (120) est déplacé vers la surface de fond de la rainure (110) par la tige (232), l'élément de verrouillage (120) est capable de passer à une extrémité de la mâchoire de verrouillage (220) depuis l'autre extrémité.

10. Véhicule électrique comprenant le module de batterie remplaçable selon la revendication 1.

11. Station d'échange de batterie comprenant le module de batterie remplaçable selon la revendication 1.
